# EUROPÄISCHE PATENTSCHRIFT

(11) **EP 2 490 527 B1**
(45) Veröffentlichungstag und Bekanntmachung des Hinweises auf die Patenterteilung: **10.07.2013**
(21) Anmeldenummer: 10752722.8
(22) Anmeldetag: 27.08.2010
(51) Int. Cl.: A01N 25/10, A01N 25/34, A01N 59/16, A01N 59/20, C09J 7/02

(54) **ÜBERZUG FÜR GEGENSTÄNDE, INSBESONDERE IN ÖFFENTLICHEN EINRICHTUNGEN UND/ODER VERKEHRSMITTELN, ZUR VERHINDERUNG EINER INFEKTIONSÜBERTRAGUNG**
COATING FOR OBJECTS, IN PARTICULAR IN PUBLIC FACILITIES AND/OR MEANS OF TRANSPORTATION, FOR PREVENTING THE TRANSMISSION OF INFECTIONS
REVÊTEMENT POUR OBJETS, EN PARTICULIER DANS LES ÉQUIPEMENTS ET/OU LES TRANSPORTS PUBLICS, DESTINÉ À PRÉVENIR LA TRANSMISSION DES INFECTIONS

(30) Priorität: 22.10.2009 DE 102009050425
(43) Veröffentlichungstag der Anmeldung: 29.08.2012
(73) Patentinhaber: Blücher GmbH, 40699 Erkrath (DE)
(72) Erfinder: VON BLÜCHER, Hasso, 40699 Erkrath (DE)
(74) Vertreter: Von Rohr
(86) Internationale Anmeldenummer: PCT/EP2010/005256
(87) Internationale Veröffentlichungsnummer: WO 2011/047747

(56) Entgegenhaltungen:
- WO-A2-2008/099111
- US-A- 5 069 907
- US-A1- 2009 155 328

## Beschreibung

Die Erfindung betrifft die Verwendung eines Überzugs für Gegenstände, insbesondere in öffentlichen Einrichtungen und/oder Verkehrsmitteln, zur Verhinderung einer Infektionsübertragung, mit einem Überzugmaterial, insbesondere mit viruzider und/oder virustatischer und/oder bakteriozider und/oder bakteriostatischer und/oder fungizider und/oder fungistatische Wirkung, wobei das Überzugmaterial zum äußeren Aufbringen auf Oberflächen von Gegenständen vorgesehen ist.

Die Übertragung von Krankheiten erfolgt nicht selten durch eine Ansteckung im öffentlichen Bereich. Aufgrund des Kontaktes mit unterschiedlichen Personen kann es zu Infektionen kommen. Bei einer Infektion kommt es zum aktiven oder passiven Eindringen von Krankheitserregern in den Organismus und häufig zu deren Vermehrung dort. Die in Regel darauf folgende Reaktion des Organismus kann sich in einer Infektionskrankheit äußern. Bei den häufigsten Ansteckungen handelt es sich um Virus- oder Pilzinfektionen sowie um bakterielle Infektionen. Zu Infektionen der vorgenannten Art kann es insbesondere in öffentlichen Einrichtungen oder Verkehrsmitteln kommen, da dort viele Personen verkehren.

Zur Verringerung des Risikos einer Kontaktinfektion ist es aus der DE 103 05 142 A1 bekannt, zur Unterbrechung einer Infektionsübertragung Oberflächen mit keimtötender Wirkung zur Verfügung zu stellen, wobei Metalle zur Keimabtötung verwendet werden. Dabei wird für einen Türdrücker ein metalldotierter formstabiler Kunststoffgriff vorgeschlagen, der auf den Türdrücker aufgeschoben wird. Im vorderen Bereich des Griffs ist innenseitig ein Nippel vorgesehen, der in der aufgeschobenen Stellung in eine Bohrung des Türdrückers einrastet. Durch die Rastverbindung soll das leichte Entfernen des Griffs verhindert werden. Soll der Griff ausgetauscht oder abgenommen werden, erfolgt dies durch Ausbohren des Nippels. Hierzu ist im Bereich des Nippels an der Außenseite des Griffs eine Vertiefung vorgesehen, um einen Bohrer ansetzen zu können.

Der bekannte metalldotierte Türgriff weist eine rohrartige Form auf und kann auf entsprechend ausgebildete rohrförmige Türdrücker aufgeschoben werden. Von Nachteil ist, daß viele Türdrücker eine von der Rohrform abweichende Ausbildung haben. Im übrigen stellt der Türdrücker und der metalldotierte Griff beim Stand der Technik eine Einheit dar, da die Verrastung des Türgriffs am Türdrücker notwendig ist. Der Einsatz des bekannten Türdrückers mit Türgriff hat bisher keinen Eingang in die Praxis gefunden. Der Grund dafür dürfte insbesondere darin bestehen, daß vorhandene Türgriffe, die üblicherweise eine von der Rohrform abweichende Form und im übrigen keine Rastöffnung zur Verrastung des Türgriffs aufweisen, ausgetauscht werden müßten.

Aus der Praxis sind im übrigen Faser- und textile Flächenmaterialien bekannt, die ionisches Kupfer beihalten. Diese Materialien werden beispielsweise in Handtaschen als Innenfutter verwendet. Zur Verwendung als Überzug sind die vorgenannten Gewebe nicht geeignet, da sie schnell verschmutzen schlecht zu reinigen sind und aufgrund ihrer Gewebestruktur die Möglichkeit bieten, daß sich Krankheitserreger dort in einer solchen Menge festsetzen, daß selbst bei einer guten viruziden oder bakterioziden Wirkung nicht alle Krankheitserreger inaktiviert bzw. abgetötet werden können.

Die WO 2008/099111 A2 betrifft ein Verfahren zum antimikrobiellen Schutz eines Objekts unter Verwendung einer Kunststofffolie, welche mit einem Haftklebstoff ausgerüstet ist. Die Kunststofffolie ist dabei nach Art eines Überzugs mit einer unterseitigen Klebeschicht ausgebildet, wobei der Überzug auf ein zu schützendes Material aufgeklebt wird.

Weiterhin betrifft die US 2009/155328 A1 eine Folie, die ein Überzugsmaterial mit antimikrobieller oder fungistatischer Wirkung aufweist, wobei die Folie innenseitig auf eine Lebensmittelverpackung aufgebracht werden soll.

Darüber hinaus betrifft die US 5 069 907 A eine chirurgische Abdeckung (*surgical drape),* die bei Operationen eingesetzt werden soll, um Infektionen zu vermeiden. Die Abdeckung wird auf eine Wunde aufgelegt und weist zur Befestigung unterseitig eine Klebestelle mit einem entsprechenden Klebstoff auf.

Zudem betrifft die GB 2 444 054 A einen Überzug für Gegenstände zur Verhinderung einer Infektion, wobei der Überzug eine Hülse aus einem bei Wärmeeinfluss schrumpfenden Material aufweist. Für unterschiedliche Durchmesser von zylindrischen Gegenständen sind unterschiedliche Hülsengrößen vorgesehen.

Aufgabe der vorliegenden Erfindung ist es nun, einen Überzug der eingangs genannten Art zur Verfügung zu stellen, der für Gegenstände unterschiedlichster Form, insbesondere in öffentlichen Einrichtungen und Verkehrsmitteln, wie Türdrücker, Haltestangen, Griffe und dergleichen, einsetzbar ist.

Zur Lösung der zuvor geschilderten Aufgabenstellung schlägt die vorliegende Erfindung die Verwendung eines Überzugs gemäß Anspruch 1 vor. Weitere vorteilhafte Ausgestaltungen der erfindungsgemäßen Verwendung sind Gegenstand der diesbezüglichen Unteransprüche.

Zudem schlägt die vorliegende Erfindung zur Lösung der zuvor geschilderten Aufgabenstellung ein Verfahren zum Aufbringen eines Überzugs auf die Oberfläche eines Gegenstands gemäß Anspruch 7 vor.

Die vorliegende Erfindung betrifft somit die Verwendung eines Überzug für Gegenstände, insbesondere in öffentlichen Einrichtungen und/oder Verkehrsmitteln, zur Verhinderung einer Infektionsübertragung, aus einem Überzugmaterial, mit einem Wirkstoff mit viruzider und/oder virostatischer und/oder bakteriozider und/oder bakteriostatischer und/oder fungizider und/oder fungistatischer Wirkung, wobei das Überzugmaterial zum äußeren Aufbringen auf Oberflächen von Gegenständen vorgesehen ist, wobei das Überzugmaterial flexibel und an die äußere Form des Gegenstands anpassbar und aus einem ein- oder mehrschichtigen, zumindest eine Kunststoff enthaltende Schicht aufweisenden Folienmaterial hergestellt ist und wobei in der äußeren Schicht des Überzugmaterials, die im Gebrauchszustand des Überzugs die Griffseite für Nutzer darstellt, der Wirkstoff inkorporiert ist. Erfindungsgemäß ist es dabei vorgesehen, dass der Überzug bandförmig und um den Gegenstand wickelbar ist und dass das Überzugmaterial ein durch Wärmeeinwirkung schrumpfbares, als Schrumpffolie ausgebildetes Kunststoffmaterial aufweist und zum Aufschrumpfen auf einen Gegenstand vorgesehen ist.

Zudem betrifft die vorliegende Erfindung somit ein Verfahren zum Aufbringen eines Überzugs aus einem flexiblen Überzugmaterial auf die Oberfläche eines Gegenstands, insbesondere in öffentlichen Einrichtungen und/oder Verkehrsmitteln, zur Verhinderung einer Infektionsübertragung, wobei der Überzug ein Überzugmaterial mit einem Wirkstoff mit viruzider und/oder virostatischer und/oder bakteriozider und/oder bakteriostatischer und/oder fungizider und/oder fungistatischer Wirkung aufweist, wobei das Überzugmaterial zum äußeren Aufbringen auf Oberflächen von Gegenständen vorgesehen ist, wobei sich das Überzugmaterial beim Aufbringen auf den Gegenstand an die äußere Form des Gegenstands anpasst, wobei das Überzugmaterial aus einem ein- oder mehrschichtigen, zumindest eine Kunststoff enthaltende Schicht aufweisenden Folienmaterial hergestellt ist und wobei in der äußeren Schicht des Überzugsmaterials, die im Gebrauchszustand des Überzugs die Griffseite des Nutzers darstellt, der Wirkstoff inkorporiert ist. Erfindungsgemäß ist es dabei vorgesehen, dass der Überzug bandförmig ist und um den Gegenstand gewickelt wird und dass das Überzugmaterial ein durch Wärmeeinwirkung schrumpfbares, als Schrumpffolie ausgebildetes Kunststoffmaterial aufweist und der Überzug nach dem Aufbringen zur Befestigung auf den Gegenstand aufgeschrumpft wird.

Zur Lösung der vorgenannten Aufgabe ist bei der Verwendung eines Überzugs der eingangs genannten Art erfindungsgemäß im wesentlichen vorgesehen, daß das Überzugmaterial flexibel und an die äußere Form des Gegenstands anpaßbar ist. Im Gegensatz zum Stand der Technik ist das Überzugmaterial nicht formstabil sondern flexibel und kann damit an die äußere Form des Gegenstands angepaßt werden. Der Überzug ist damit nicht auf eine bestimmte Querschnittsform des zu überziehenden Gegenstands festgelegt, sondern kann grundsätzlich auf jeden Gegenstand mit vorgegebenem Durchmesser aufgezogen werden, unabhängig von der Querschnittsform des Gegenstands. Damit ist der Anwendungsbereich des Überzugs gemäß der erfindungsgemäßen Verwendung gegenüber dem bekannten Überzug erheblich erweitert.

Das Überzugmaterials wird aus einem Folienmaterial hergestellt. Aufgrund der geringen Schichtdicke können Folienmaterialien üblicherweise die notwendige Flexibilität des Überzugs und damit die Anpassung an die äußere Form des Gegenstands gewährleisten. Dabei ist das Folienmaterial ein- oder mehrschichtig ausgebildet. In jedem Falle weist das Folienmaterial zumindest eine Kunststoff enthaltende Schicht auf, die dann vorzugsweise als Tragschicht dient oder zumindest eine Tragfunktion hat. Eine derartige Folie läßt sich nicht nur in besonders einfacher Weise durch Extrusion, Co-Extrusion oder Blasextrusion herstellen, sie zeichnet sich insbesondere durch eine sehr geringe Oberflächenrauhheit aus. Die Oberflächenrauhheit ist bevorzugt kleiner 10% der Schichtdicke des Folienmaterials, bevorzugt kleiner 5% und insbesondere kleiner 1%. So ergibt sich beispielsweise bei einer Folie mit einer Schichtdicke von 300 µm eine Rauhigkeit von maximal 30 µ. Bevorzugt ist die Rauhigkeit kleiner 3 µm. Letztlich führt die geringe Rauhigkeit dazu, daß sich Krankheitserreger nicht hinreichend an der Oberfläche anlagern können, während etwaig angelagerte Krankheitserreger über die eingangs genannte Wirkung des Überzugs inaktiviert oder abgetötet werden. Im übrigen kann die Oberfläche leicht gereinigt werden. Schließlich haben aus Folienmaterial hergestellte Überzüge den wesentlichen Vorteil, daß sie ausgesprochen preisgünstig sind, da die vorgenannten Herstellungsverfahren, zu denen im übrigen auch das Gießen und Kalandrieren gehört, eine kostengünstigere Herstellung großer Mengen an Überzugsmaterial ermöglichen.

Die Schichtdicke des Folienmaterials sollte zwischen 10 µm und 10 mm, bevorzugt zwischen 20 µm und 2000 µm, weiter bevorzugt zwischen 50 µm und 1000 µm und insbesondere zwischen 100 und 500 µm liegen. Derartige Schichtdicken führen einerseits zu einem hinreichend flexiblen Überzugsmaterial, das im übrigen einfach verarbeitet werden kann und kostengünstig ist.

Im übrigen sollte das Folienmaterial, wie bereits erwähnt, zumindest eine Schicht als Tragschicht aufweisen. Diese kann aus Polyolefinen, insbesondere PE oder PP, Polyester, Polyamid, Polyurethan, Polyetherester, Acrylaten, PS, Polymilchsäure, nachwachsenden Rohstoffen, wie Cellulose, oder biologisch abbaubaren Kunststoffen, wie z. B. PRA bestehen. Im übrigen kann diese Schicht auch Farbmittel und weitere Additive enthalten, wie z. B. UV-Stabilisatoren, Antioxidantien, Flammhemmer oder dergleichen.

Von besonderem Vorteil ist es im übrigen, daß der Überzug bandförmig und um den Gegenstand wickelbar ist. Bahnen der vorgenannten Art sind zum einen relativ einfach und kostengünstig durch die vorgenannten Verfahren herstellbar. Zum anderen lassen sich Bänder sehr leicht auf einen Gegenstand aufbringen. Dabei ergibt sich insbesondere bei Bändern der wesentliche Vorteil, daß Überzüge aus Bändern keine Gegenstände erfordern, die zumindest an einem Ende frei zugänglich sind. Bänder können auf jegliche Gegenstände und auf jegliche Oberflächen aufgebracht werden, auch wenn die Gegenstände keine freien Enden haben, wie beispielsweise beidseitig eingespannte oder befestigte Haltestangen, Griffe oder dergleichen. Im übrigen ist es bei Bändern, je nach Ausbildung des Bandes und des betreffenden Gegenstandes, nicht erforderlich, daß das Band spiralförmig um den Gegenstand gewickelt ist. Auch eine Wicklung in Längsrichtung des Gegenstandes ist ohne weiteres möglich.

Im übrigen ist darauf hinzuweisen, daß unter einem bandförmigen Überzug Bandbreiten größer 5 mm verstanden werden. Unter Bändern im Sinne der vorliegenden Erfindung werden auch sonstige Folienlagen, die beispielsweise eine quadratische oder rechteckige Form mit Flächen größer 1 qm haben, verstanden.

Von besonderem Vorteil ist es in diesem Zusammenhang, daß das Kunststoffmaterial des Überzugs derart ausgebildet ist, daß es durch Wärmeeinwirkung schrumpfbar ist. Die betreffende Kunststoffschicht stellt in diesem Falle also eine Schrumpffolie dar. Durch das Aufschrumpfen, das in einfacher Weise vorgenommen werden kann, läßt sich eine schnelle und sichere Befestigung des Überzugs auf dem Gegenstand realisieren, ohne daß am Gegenstand besondere Mittel oder Verbindungselemente vorhanden sein müssen.

Im übrigen kann zur Verbindung des Überzugs mit dem Gegenstand auch eine Verklebung zum Einsatz kommen. Hierzu kann dem Überzug, beispielsweise in Form eines Sets, ein Klebstoff zugeordnet sein, der auf den Gegenstand aufgebracht wird, bevor der Überzug aufgebracht wird. Insbesondere bei einem bandförmigen Überzug bietet es sich an, wenn das Überzugmaterial auf seiner dem Gegenstand zugewandten Unterseite eine Klebstoffbeschichtung aufweist. Bei der Klebstoffbeschichtung kann es sich bevorzugt um einen wieder ablösbaren Klebstoff handeln, so daß gerade bei einer Fehlausrichtung bei der Anbringung eine nachträgliche Ausrichtung in einfacher Weise möglich ist. In diesem Zusammenhang sollte zum Schutz der Klebschicht eine äußere Schutzschicht vorgesehen sein, die vor der Applikation abgezogen wird. Die Schutzschicht kann beispielsweise silikonisiert sein.

Von besonderem Vorteil ist es im übrigen, daß das Überzugmaterial elastisch dehnfähig ist. Die elastische Dehnfähigkeit ermöglicht es, für Gegenstände mit unterschiedlichem Durchmesser einen einzigen Überzugtyp zur Verfügung zu stellen, der aufgrund seiner Elastizität auf unterschiedlich große Gegenstände aufgebracht werden kann. Im übrigen kann durch die Flexibilität und Anpaßbarkeit des Überzugmaterials und insbesondere durch die elastische Dehnfähigkeit sichergestellt werden, daß sich der Überzug im auf den Gegenstand aufgebrachten Zustand vollflächig oder zumindest im wesentlichen vollflächig an die Oberfläche des Gegenstands anlegt.

Um die Handhabung des Überzugs gemäß der erfindungsgemäßen Verwendung für unterschiedlichste Gegenstände so einfach wie möglich zu gestalten, sollte der Überzug bzw. das Überzugmaterial mit einer Länge von mehr als 1 m, insbesondere mehr als 3 m auf einer Rolle oder dergleichen aufgewickelt und bevorratet sein. Für den jeweiligen Bedarfsfall kann dann von der Rolle die notwendige Länge an Überzugmaterial entnommen bzw. abgetrennt und auf den Gegenstand aufgebracht werden. Die Breite der Rolle ist dabei auf die Breite des Überzugs- bzw. des Überzugmaterials abgestimmt. Dementsprechend sollte die Breite der Rolle größer 5 mm sein. Auch Rollen mit einer Breite von bis zu 2 m sind grundsätzlich möglich. Letztlich bestimmt die Breite der Rolle und damit die Breite des Überzugs den Anwendungszweck bzw. die Größe und Form des zu schützenden Gegenstands.

Zur Verhinderung der Infektionsübertragung weist das Überzugmaterial Metalle auf, die entsprechende Eigenschaften haben. Hierbei kommt insbesondere Kupfer und vor allem auch Silber in Betracht. Die vorgenannten Metalle zeichnen sich durch ihre viruzide, bakteriozide und fungizide Wirkung aus. Besonders gute Wirkeffekte ergeben sich bei Kupfer, wenn dieses Metall in ionischer Form vorliegt. So kommt vor allem der Einsatz von Kupfer in Form von Salzen und/oder Oxiden in Betracht. Dem gegenüber ist es bei Silber so, daß dieses in elementarer Form vorliegen sollte. Hierbei ergeben sich die besten Wirkeffekte.

Das Metall sollte bevorzugt in partikulärer Form, insbesondere in Form von Nanopartikeln, und/oder in Form von Fäden, beispielsweise in Form von Einzelfäden oder in gitterförmiger Ausbildung und/oder in Form von Filamenten im Überzugmaterial vorliegen. Die Partikelgröße sollte dabei zwischen 10 und 2000 nm, bevorzugt zwischen 100 und 1000 nm und weiter bevorzugt zwischen 200 und 300 nm liegen.

Der Anteil des metallischen Wirkstoffs sollte zwischen 0,001 bis 20 Gew.-% bezogen auf das Gesamtgewicht des Überzugs betragen. Bevorzugt liegt der Anteil zwischen 0,01 und 5 Gew.-% und weiter bevorzugt zwischen 0,1 bis 2 Gew.-%.

Bei dem Einsatz eines Folienmaterials ist es vorgesehen, daß das Überzugmaterial zumindest auf seiner dem Gegenstand abgewandten äußeren Seite, die im Gebrauchszustand des Überzugs die Griffseite für die Nutzer darstellt, eine das Metall enthaltende Beschichtung bzw. Wirkschicht aufweist. In diesem Falle ist dann eine Trägerschicht vorgesehen, die im wesentlichen zur Anbringung und Befestigung des Überzug auf dem jeweiligen Gegenstand dient. Auf die Trägerschicht ist die den Wirkstoff bzw. das Metall enthaltende Beschichtung als Wirkschicht aufgebracht, bevorzugt mit einer geringeren Schichtdicke als die Trägerschicht. Bevorzugt liegt das Verhältnis der Schichtdicke der Trägerschicht zur Wirkschicht zwischen 1 : 1 bis 10 : 1. Der Vorteil der vorgenannten Beschichtung liegt insbesondere darin, daß in der äußeren Wirkschicht der Anteil an dem Metall vergleichsweise groß sein kann, so daß der Überzug ausgesprochen wirksam ist.

Das Metall sollte jedenfalls gleichmäßig in der äußeren Wirkschicht verteilt sein. Durch die gleichmäßige Verteilung ist sichergestellt, daß auch bei einer Abnutzung der äußeren Oberfläche stets genügend Wirkmaterial beim weiteren Anfassen eines durch einen Überzug geschützten Gegenstandes vorliegt.

Im übrigen betrifft die vorliegende Erfindung somit auch das zuvor angefühle Verfahren zum Aufbringen eines Überzugs zur Verhinderung einer Infektionsübertragung auf die Oberfläche eines Gegenstands, insbesondere in öffentlichen Einrichtungen und/oder Verkehrsmittel, wobei sich das Überzugmaterial des Überzugs beim Aufbringen auf den Gegenstand an die äußere Form des Gegenstands flexibel anpaßt.

Von besonderem Vorteil im Zusammenhang mit dem erfindungsgemäßen Verfahren ist, daß der Überzug im montierten Zustand des Gegenstands und/oder nachträglich auf die Oberfläche des Gegenstands aufgebracht werden kann, und zwar unabhängig davon, ob der Gegenstand an einem oder an zwei Enden befestigt ist. Insbesondere ermöglicht es das erfindungsgemäße Verfahren, bereits vorhandene Gegenstände mit einem Überzug zur Verhinderung einer Infektionsübertragung nachzurüsten.

Es darf ausdrücklich darauf hingewiesen werden, daß vorstehende und auch nachfolgende Bereichsangaben sämtliche Zwischenintervalle und Einzelwerte umfassen und diese als erfindungswesentlich angesehen werden, auch wenn die Zwischenintervalle und Einzelwerte im einzelnen nicht genannt sind.

Nachfolgend werden Ausführungsbeispiele der Erfindung anhand der Zeichnung näher beschrieben. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt
- Fig. 1: eine schematische Darstellung eines auf einen Türdrücker aufgebrachten Überzuges (Vergleich) im nicht befestigten Zustand,
- Fig. 2: eine Darstellung entsprechend Fig. 1 mit befestigtem Überzug,
- Fig. 3: eine schematische Darstellung eines auf eine Haltestange aufgebrachten Überzugs,
- Fig. 4: eine vergrößerte Detaildarstellung der Ausführungsform gemäß Fig. 3,
- Fig. 5: eine erfindungsgemäße, andere Ausführungsform entsprechend der Detaildarstellung aus Fig. 4,
- Fig. 6: eine Darstellung einer Trinkflasche mit einem nicht befestigten Überzug (Vergleich),
- Fig. 7: eine Darstellung der Trinkflasche aus Fig. 6 mit befestigtem Überzug,
- Fig. 8: eine Darstellung eines Schlauchs zur Herstellung eines Überzugs (Vergleich),
- Fig. 9: eine Darstellung eines Bandes zur Herstellung eines Überzugs,
- Fig. 10: eine Darstellung eines auf einer Rolle bevorrateten Bandes zur Herstellung von Überzügen,
- Fig. 11: eine Querschnittsansicht einer Ausführungsform eines Schichtaufbaus des Überzugsmaterials (Vergleich),
- Fig. 12: eine Darstellung einer weiteren Ausführungsform eines Schichtaufbaus des Überzugsmaterials (Vergleich),
- Fig. 13: eine Darstellung einer weiteren Ausführungsform eines Schichtaufbaus des Überzugsmaterials gemäß der erfindungsgemäßen Verwendung und
- Fig. 14: eine Darstellung einer weiteren Ausführungsform eines Schichtaufbaus des Überzugsmaterials gemäß der erfindungsgemäßen Verwendung.

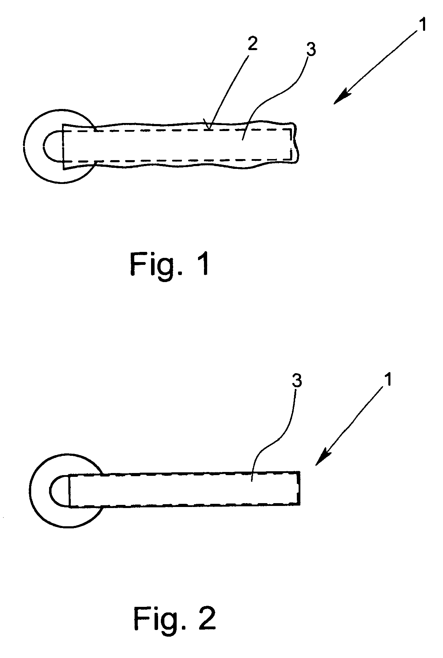

In den Fig. 1 bis 7 sind unterschiedliche Anwendungsbeispiele für Überzüge 1 bei unterschiedlichen Gegenständen dargestellt. Bei allen Ausführungsformen ist es so, daß der jeweilige Überzug 1 zur Verhinderung einer Infektionsübertragung und damit letztlich zur Bereitstellung einer sterilen Oberfläche vorgesehen ist. Hierzu weist der Überzug 1 ein Überzugmaterial auf, das insbesondere mit viruzider und/oder virostatischer und/oder bakteriozider und/oder bakteriostatischer und/oder fungizider und/oder fungistatischer Wirkung versehen ist. Dies beruht vorliegend auf der Wirkung entsprechender Metalle, die im Überzugmaterial inkorporiert sind. Bei dem Metall handelt es sich bei den Ausführungsbeispielen um Silber in elementarer Form.

Vorliegend ist das Überzugmaterial und damit der Überzug 1 zum äußeren Aufbringen auf Oberflächen 2 von Gegenständen vorgesehen. Bei den Gegenständen kann es grundsätzlich um Gegenstände jeglicher Art, die gehandhabt und/oder angefaßt werden, handeln. Insbesondere handelt es sich um Gegenstände im öffentlichen Bereich, wie in öffentlichen Einrichtungen oder öffentlichen Verkehrsmitteln. Hierauf ist die Erfindung jedoch nicht beschränkt. Insbesondere kann es sich bei den Gegenständen auch um Ausrüstungsgegenstände im Militärbereich und/oder zum ABC-Schutz handeln. Dies kann beispielsweise Waffen und andere Gegenstände umfassen, die von unterschiedlichen Personen angefaßt werden können.

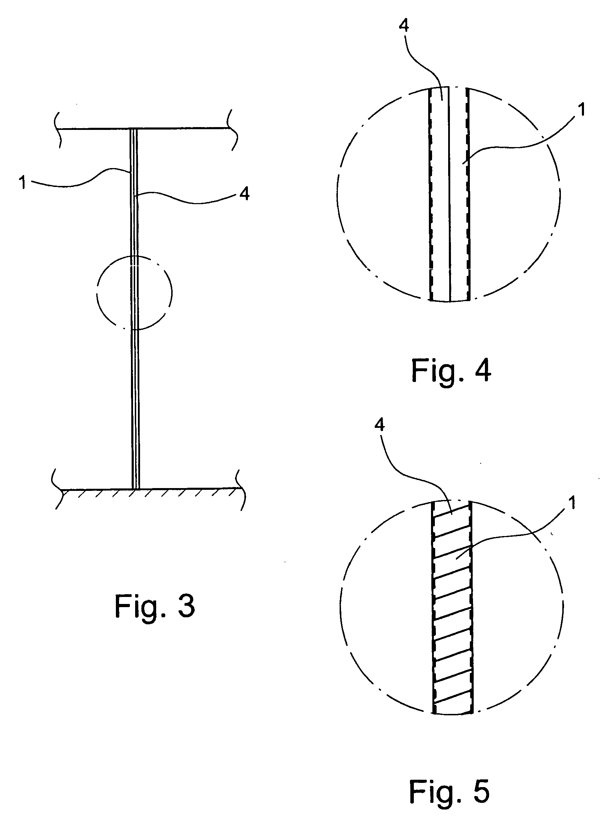

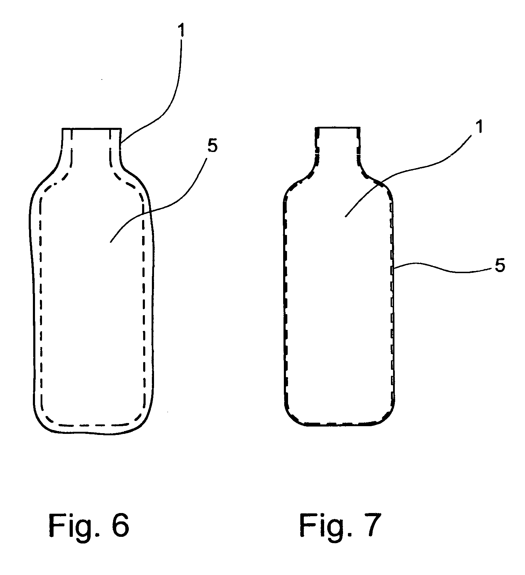

In den Fig. 1 bis 7 sind als Gegenstände beispielhaft ein Türdrücker 3 (Fig. 1 und 2), eine Haltestange 4 (Fig. 3 bis 5) und eine Trinkflasche 5 (Fig. 6 und 7) dargestellt.

Bei allen Ausführungsformen und Vergleichsbeispielen ist es so, daß das Uberzugmaterial und damit der Überzug 1 flexibel ausgebildet ist und sich an die Geometrie des betreffenden Körpers anpaßt.

In den Fig. 1 bis 7 sind nun unterschiedliche Ausführungsformen bzw. Vergleichsbeispiele von Überzügen 1 für unterschiedliche Gegenstände dargestellt. Bei der Ausführungsform gemäß den Fig. 1 und 2 (Vergleich) ist auf einen Türdrücker 3, der vorliegend eine zylindrische Form hat, hierauf jedoch nicht beschränkt ist, ein Überzug 1 in Form eines Schlauchs aufgezogen. Vorliegend ist der Schlauch endseitig geschlossen, was jedoch nicht unbedingt der Fall sein muß. Wie sich aus der Darstellung gemäß Fig. 1 ergibt, ist die Querschnittsfläche des Überzugs 1 größer als die Querschnittsfläche des Türdrückers 1, so daß ein Überziehen ohne weiteres möglich ist. Der als Schlauch ausgebildete Überzug 1 besteht vorliegend aus einer Schrumpffolie aus entsprechendem Kunststoff, der sich unter Wärmeeinfluß zusammenzieht bzw. schrumpft. In Fig. 2 ist der aufgeschrumpfte Zustand des Überzugs 1 dargestellt. Dabei liegt der Überzug 1 vollflächig an der Oberfläche 2 des Türdrückers 3 an.

Fig. 3 zeigt eine Ausführungsform, bei der als Gegenstand eine Haltestange 4 vorgesehen ist, die jeweils an ihrem oberen und unteren Ende befestigt ist. Auf die Oberfläche 2 der Haltestange 4 ist auch hier ein Überzug 1 aufgebracht. Wie sich dabei aus der Detaildarstellung gemäß Fig. 4 ergibt, ist der bandförmig ausgebildete Überzug 1 der Länge nach auf die Haltestange 4 aufgebracht.

Eine alternative Ausführungsform ist in Fig. 5 dargestellt, bei der das Überzugmaterial spiralförmig um die Haltestange 4 gewunden ist.

Die Befestigung des jeweiligen Überzugs 1 kann dabei durch unterschiedliche Maßnahmen erfolgen. Bei der in Fig. 4 dargestellten Ausführungsform weist das bandförmige Überzugmaterial unterseitig eine Klebstoffbeschichtung auf. Alternativ ist es auch möglich, auf die Oberfläche 2 der Haltestange 4 einen Klebstoff aufzubringen, der anschließend zur Verbindung mit dem Überzug 1 dient. Bei der in Fig. 5 dargestellten Ausführungsform ist das Überzugmaterial elastisch dehnfähig, so daß der Überzug 1 - letztlich reibschlüssig - und zumindest im wesentlichen ohne Klebstoff an der Haltestange 4 gehalten ist.

In den Fig. 6 und 7 (Vergleich) ist eine Ausführungsform dargestellt, bei der als Gegenstand eine Trinkflasche 5 vorgesehen ist. Der Überzug 1 ist bei der Ausführungsform gemäß Fig. 6 locker über die Trinkflasche 5 gezogen. Nach Aufschrumpfen des als Schrumpffolie ausgebildeten Überzug 1 liegt dieser vollflächig an der Oberfläche 1 der Trinkflasche 5 an.

Hinzuweisen ist darauf, daß insbesondere bei der Ausführungsform gemäß den Fig. 6 und 7 grundsätzlich auch ein Überzug 1 aus einem elastisch dehnfähigen Überzugsmaterial eingesetzt werden kann, wobei der Überzug 1 zunächst etwas gedehnt und dann über den betreffenden Gegenstand gezogen wird. Anschließend zieht sich das Überzugsmaterial wieder zusammen und der Überzug 1 liegt zumindest teilflächig an der Oberfläche 2 des jeweiligen Gegenstands an.

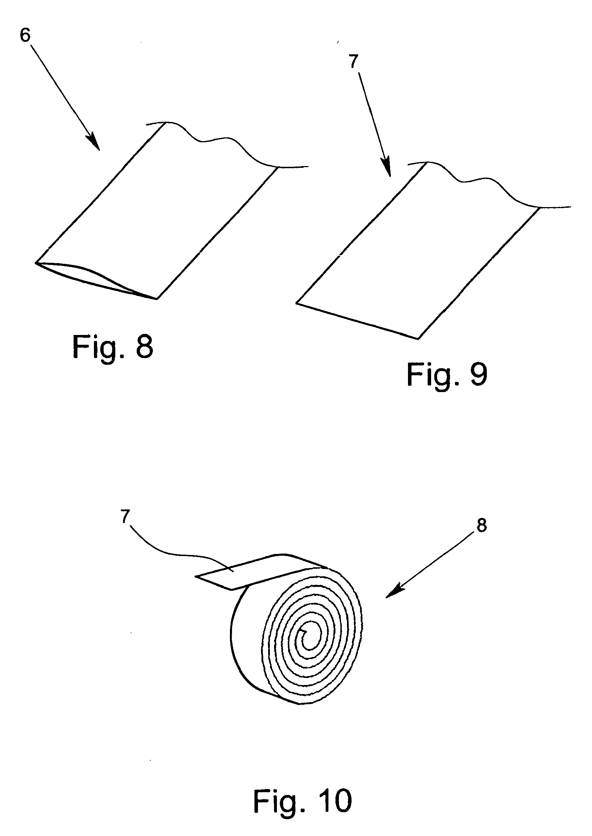

In Fig. 8 ist ein Schlauch 6 zur Bildung eines oder mehrerer Überzüge 1 dargestellt (Vergleich). Bei dem Schlauch 6 handelt es sich vorliegend um ein durch Wärmeeinwirkung schrumpfbares Folienmaterial. Grundsätzlich kann es sich bei dem Schlauch 6 auch um ein elastisch dehnfähiges Material handeln. Die Abmaße des Schlauchs 6 hängen vom jeweiligen Anwendungsfall, das heißt von der Länge und dem Durchmesser des jeweiligen Gegenstands, ab. Die Breite des Schlauchs 6 im zusammengelegten Zustand entsprechend Fig. 8 bzw. dessen Querschnittsfläche ist variabel. So sind Schläuche mit einer Breite ab 0,5 cm möglich.

Fig. 9 zeigt ein Band 7 zur Herstellung eines oder mehrerer Überzüge 1. Von den Abmaßen her entspricht das Band 7 dem vorgenannten Schlauch 6. Sowohl der Schlauch 6 als auch das Band 7 haben letztlich eine endlose Länge.

In Fig. 10 ist eine Rolle 8 mit einem Endlosband 7 zur Herstellung von Überzügen 1 dargestellt. Dabei ist das Band 7 auf sich auf der Rolle 8 aufgewickelt.

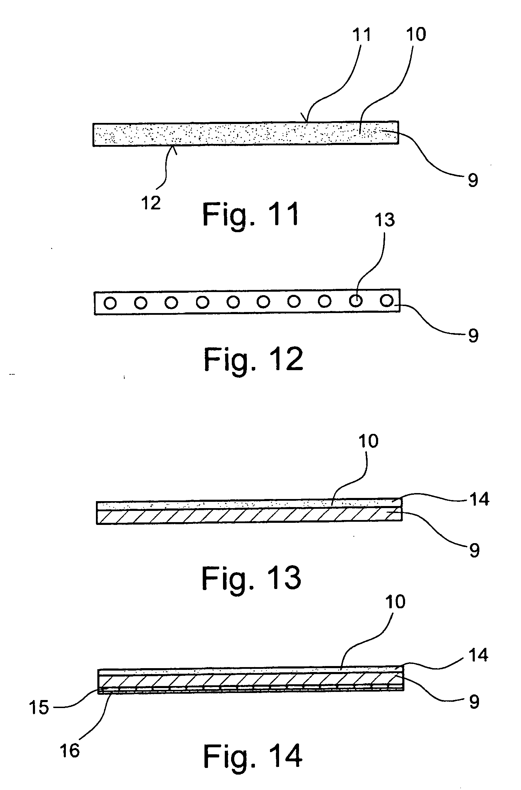

In den Fig. 11 bis 14 sind verschiedene Schichtaufbauten des Überzugmaterials für Überzüge 1 dargestellt. Bei allen Ausführungsformen liegt die Schichtdicke des jeweiligen Materials zwischen 100 bis 2000 µm. Im übrigen ist bei allen Ausführungsformen eine Tragschicht 9 aus Kunststoff vorgesehen.

Bei der Ausführungsform gemäß Fig. 11 (Vergleich) befinden sich in der Tragschicht 9 als Wirkstoff Silberpartikel 10 in Form von Nanopartikeln mit einer Partikelgröße zwischen 200 bis 300 nm. Die Partikel 10 liegen vorliegend in elementarer Form vor. Im übrigen sind die Partikel vorliegend über die Schichtdicke gleichmäßig verteilt. Grundsätzlich ist es aber auch möglich, daß die Partikel 10 verstärkt an der Oberseite 11 und geringer bis gar nicht an der Unterseite 12 vorgesehen sind. Bei der Oberseite 11 handelt es sich letztlich um die äußere, dem Benutzer zugewandte Wirkfläche des Überzugs 1, während die Unterseite 12 im aufgezogenen Zustand der Oberfläche 2 des Gegenstands zugewandt ist.

Bei der Ausführungsform gemäß Fig. 12 (Vergleich) sind in der Tragschicht 9 eine Vielzahl von Fäden 13 aus dem Wirkmetall vorgesehen. Nicht dargestellt ist, daß es sich bei der Anordnung der Fäden 13 letztlich um eine Gitteranordnung handelt. Allerdings können auch eine Vielzahl kurzer Fäden oder Filamente des Metalles ohne Ausrichtung in der Tragschicht 9 vorgesehen sein. Bei der in Fig. 12 dargestellten Ausführungsform entspricht der Durchmesser der Fäden 13 etwa der Schichtdicke der Tragschicht 9. Dies muß jedoch nicht so sein. Die Fäden 13 können grundsätzlich einen sehr viel kleineren Durchmesser haben. So kann der Durchmesser der Fäden um den Faktor 1 bis 100 kleiner sein als die Schichtdicke der Tragschicht 9. Im übrigen ist es auch bei der Ausführungsform gemäß Fig. 12 möglich, daß die Fäden lediglich im oberen Bereich, also im Bereich der Oberseite 11 und nur vereinzelt oder gar nicht im Bereich der Unterseite 12 vorgesehen sind.

Bei der Ausführungsform gemäß Fig. 13 befindet sich auf der Tragschicht 9 eine Wirkschicht 14 mit dem Wirkmetall. Die Wirkschicht 14 kann wie eine der Schichten 11, 12 ausgebildet sein. Bevorzugt ist die Dicke der Wirkschicht geringer als die Dicke der Tragschicht, insbesondere um den Faktor 1 bis 50.

Bei der in Fig. 14 dargestellten Ausführungsform ist auf ein Folienmaterial entsprechend Fig. 13 unterseitig eine Klebschicht 15 und eine Schutzschicht 16 aufgebracht. Die Schutzschicht 16 ist silikonisiert und kann vor Aufbringung des Überzugs abgezogen werden. Bei dem Klebstoff der Klebschicht 15 kann es sich um jeglichen bekannten Klebstoff handeln. Bevorzugt ist ein wieder ablösbarer Klebstoff.

### Bezugszeichenliste:

- 1: Überzug
- 2: Oberfläche
- 3: Türdrücker
- 4: Haltestange
- 5: Trinkflasche
- 6: Schlauch
- 7: Band
- 8: Rolle
- 9: Tragschicht
- 10: Partikel
- 11: Oberseite
- 12: Unterseite
- 13: Faden
- 14: Wirkschicht
- 15: Klebschicht
- 16: Schutzschicht

## Patentansprüche

1. Verwendung eines Überzugs (1) für Gegenstände, insbesondere in öffentlichen Einrichtungen und/oder Verkehrsmitteln, zur Verhinderung einer Infektionsübertragung, aus einem Überzugmaterial, mit einem Wirkstoff mit viruzider und/oder virostatischer und/oder bakteriozider und/oder bakteriostatischer und/oder fungizider und/oder fungistatischer Wirkung, wobei das Überzugmaterial zum äußeren Aufbringen auf Oberflächen (2) von Gegenständen vorgesehen ist, wobei das Überzugsmaterial flexibel und an die äußere Form des Gegenstands anpassbar und aus einem ein- oder mehrschichtigen, zumindest eine Kunststoff enthaltende Schicht aufweisenden Folienmaterial hergestellt ist und wobei in der äußeren Schicht des Überzugmaterials, die im Gebrauchszustand des Überzugs die Griffseite für Nutzer darstellt, der Wirkstoff inkorporiert ist,
**dadurch gekennzeichnet,**
**dass** der Überzug (1) bandförmig und um den Gegenstand wickelbar ist und dass das Überzugmaterial ein durch Wärmeeinwirkung schrumpfbares, als Schrumpffolie ausgebildetes Kunststoffmaterial aufweist und zum Aufschrumpfen auf einen Gegenstand vorgesehen ist.

2. Verwendung nach Anspruch 1, **dadurch gekennzeichnet, dass** das Überzugmaterial auf seiner dem Gegenstand zugewandten Unterseite eine Klebschicht (15), insbesondere mit einem wieder ablösbaren Klebstoff, aufweist, und dass, vorzugsweise, eine insbesondere silikonisierte Schutzschicht (16) auf der Klebschicht (15) vorgesehen ist.

3. Verwendung nach Anspruch 1 oder 2, **dadurch gekennzeichnet, dass** das Überzugmaterial elastisch dehnfähig ist.

4. Verwendung nach einem der vorhergehenden Ansprüche, **dadurch gekennzeichnet, dass** das Überzugmaterial mit einer Länge von mehr als 1 m, insbesondere mehr als 3 m, auf einer Rolle (8) aufgewickelt und bevorratet ist.

5. Verwendung nach einem der vorhergehenden Ansprüche, **dadurch gekennzeichnet, dass** das Überzugmaterial wenigstens ein Metall als Wirkstoff, insbesondere Kupfer und/oder Silber, aufweist.

6. Verwendung nach einem der vorhergehenden Ansprüche, **dadurch gekennzeichnet, dass** das Überzugmaterial zumindest auf seiner dem Gegenstand abgewandten Seite eine das Metall enthaltende Wirkschicht (14) aufweist.

7. Verfahren zum Aufbringen eines Überzugs aus einem flexiblen Überzugmaterial auf die Oberfläche eines Gegenstands, insbesondere in öffentlichen Einrichtungen und/oder Verkehrsmitteln, zur Verhinderung einer Infektionsübertragung, wobei der Überzug ein Überzugmaterial mit einem Wirkstoff mit viruzider und/oder virostatischer und/oder bakteriozider und/oder bakteriostatischer und/oder fungizider und/oder fungistatischer Wirkung aufweist, wobei das Überzugmaterial zum äußeren Aufbringen auf Oberflächen von Gegenständen vorgesehen ist, wobei sich das Überzugmaterial beim Aufbringen auf den Gegenstand an die äußere Form des Gegenstands anpasst, wobei das Überzugmaterial aus einem ein- oder mehrschichtigen, zumindest eine Kunststoff enthaltende Schicht aufweisenden Folienmaterial hergestellt ist und wobei in der äußeren Schicht des Überzugsmaterials die im Gebrauchszustand des Überzugs die Griffseite des Nutzers darstellt, der Wirkstoff inkorporiert ist,
**dadurch gekennzeichnet,**
**dass** der Überzug bandförmig ist und um den Gegenstand gewickelt wird und dass das Überzugmaterial ein durch Wärmeeinwirkung schrumpfbares, als Schrumpffolie ausgebildetes Kunststoffmaterial aufweist und der Überzug nach dem Aufbringen zur Befestigung auf den Gegenstand aufgeschrumpft wird.

## Claims

1. Use of a cover (1) for objects, in particular in public institutions and/or means of transportation, to prevent transfer of infections, made of a cover material having an antiviral and/or virostatic and/or antibacterial and/or bacteriostatic and/or fungicidal and/or fungistatic effect, whereby the cover material is for exterior application to surfaces (2) of objects, whereby the cover material is flexible, and the external shape of the object is adjustable and is a sheet material consisting of one or more layers, containing at least one polymer, and whereby the outer layer of the cover material, which is the side that is gripped by users during use, contains the active substance,
**characterised in that**
the cover (1) is in the form of strips that can be wrapped around the object, and that the cover material has a polymer material that can be shrunk with heat, in the form of a shrink wrap to be shrunk on an object.

2. Use according to claim 1, **characterised in that** the cover material, on the lower side facing the object, has an adhesive layer (15), in particular with a detachable adhesive, and that, preferably, a protective layer (16), in particular a siliconised protective layer, is provided on the adhesive layer (15).

3. Use according to claim 1 or 2, **characterised in that** the cover material is elastically extendible.

4. Use according to any of the foregoing claims, **characterised in that** the cover material is rolled and supplied on a roll (8) at a length of more than 1 m, in particular more than 3 m.

5. Use according to any of the foregoing claims, **characterised in that** the cover material has at least one metal, in particular copper and/or silver, as an active substance.

6. Use according to any of the foregoing claims, **characterised in that**, at least on the side facing away from the object, the cover material has an active layer (14) containing the metal.

7. Method of applying a cover made of a flexible cover material to the surface of an object, in particular in public institutions and/or means of transportation, to prevent transfer of infections, made of a cover material having an antiviral and/or virostatic and/or antibacterial and/or bacteriostatic and/or fungicidal and/or fungistatic effect, whereby the cover material is for exterior application to surfaces of objects, whereby the cover material is flexible, and the external shape of the object is adjustable and is a sheet material consisting of one or more layers, containing at least one polymer, and whereby the outer layer of the cover material, which is the side that is gripped by users during use, contains the active substance,
**characterised in that**
the cover is in the form of strips that can be wrapped around the object, and that the cover material has a polymer material that can be shrunk with heat, in the form of a shrink wrap to be shrunk on an object.

## Revendications

1. Utilisation d'un revêtement (1) pour des objets, en particulier dans des établissements et/ou des transports publics, destiné à prévenir la transmission d'une infection, constitué d'un matériau de revêtement comprenant une substance active ayant une action virucide et/ou virostatique et/ou bactéricide et/ou bactériostatique et/ou fongicide et/ou fongistatique, étant entendu que le matériau de revêtement est prévu aux fins de l'application extérieure sur des surfaces (2) d'objets, étant entendu que le matériau de revêtement est flexible et peut s'adapter à la forme extérieure de l'objet et qu'il est fabriqué à partir d'un matériau en feuille à une ou plusieurs couches présentant au moins une couche contenant du plastique et étant entendu que la substance active est intégrée dans la couche extérieure du matériau de revêtement, qui dans la situation d'utilisation du revêtement, représente le côté de préhension pour l'utilisateur,
**caractérisée**
**en ce que** le revêtement (1) a une forme de bande et peut être enroulé autour de l'objet et en ce que le matériau de revêtement présente un matériau plastique pouvant se rétracter sous l'effet de la chaleur, réalisé en tant que pellicule rétractable, et il est prévu afin de se rétracter sur un objet.

2. Utilisation selon la revendication 1, **caractérisée en ce que** le matériau de revêtement présente, sur son côté inférieur dirigé vers l'objet, une couche adhésive (15), en particulier avec une colle détachable, et **en ce que** de préférence, une couche de protection (16), en particulier traitée au silicone, est prévue sur la couche adhésive (15).

3. Utilisation selon la revendication 1 ou 2, **caractérisée en ce que** le matériau de revêtement est extensible de façon élastique.

4. Utilisation selon l'une des revendications précédentes, **caractérisée en ce que** le matériau de revêtement est enroulé et fourni avec une longueur de plus de 1 m, en particulier de plus de 3 m, sur un rouleau (8).

5. Utilisation selon l'une des revendications précédentes, **caractérisée en ce que** le matériau de revêtement présente au moins un métal en tant que substance active, en particulier le cuivre et/ou l'argent.

6. Utilisation selon l'une des revendications précédentes, **caractérisée en ce que** le matériau de revêtement présente une couche active (14) contenant le métal au moins sur son côté opposé à l'objet.

7. Procédé destiné à l'application d'un revêtement constitué d'un matériau de revêtement flexible sur la surface d'un objet, en particulier dans des établissements et/ou des transports publics, destiné à prévenir la transmission d'une infection, étant entendu que le revêtement présente un matériau de revêtement comprenant une substance active ayant une action virucide et/ou virostatique et/ou bactéricide et/ou bactériostatique et/ou fongicide et/ou fongistatique, étant entendu que le matériau de revêtement est prévu aux fins de l'application extérieure sur des surfaces d'objets, étant entendu que lors de l'application sur l'objet, le matériau de revêtement s'adapte à la forme extérieure de l'objet, étant entendu que le matériau de revêtement est fabriqué à partir d'un matériau en feuille à une ou plusieurs couches présentant au moins une couche contenant du plastique et étant entendu que la substance active est intégrée dans la couche extérieure du matériau de revêtement, qui dans la situation d'utilisation du revêtement, représente le côté de préhension de l'utilisateur,
**caractérisé**
**en ce que** le revêtement a une forme de bande et peut être enroulé autour de l'objet, en ce que le matériau de revêtement présente un matériau plastique pouvant se rétracter sous l'effet de la chaleur, réalisé en tant que pellicule rétractable, et en ce que le revêtement se rétracte après l'application aux fins de la fixation sur l'objet.
